# EUROPÄISCHE PATENTSCHRIFT

(11) **EP 2 174 897 B1**
(45) Veröffentlichungstag und Bekanntmachung des Hinweises auf die Patenterteilung: **06.08.2014**
(21) Anmeldenummer: 09401015.4
(22) Anmeldetag: 26.08.2009
(51) Int. Cl.: B65G 47/76

(54) **Vorrichtung zum Führen von Leergut**
Device for guiding returnable containers
Dispositif de guidage de bouteilles consignées

(30) Priorität: 10.10.2008 DE 102008051231
(43) Veröffentlichungstag der Anmeldung: 14.04.2010
(73) Patentinhaber: Wincor Nixdorf International GmbH, 33106 Paderborn (DE)
(72) Erfinder: Springsguth, Stephan, 98704 Langenwiesen (DE); Heinze, Alexander, 98708 Gehren (DE)
(74) Vertreter: Richly, Erik

(56) Entgegenhaltungen:
- EP-A1- 0 286 080
- WO-A2-2007/127697
- WO-A2-2008/079010
- DE-C- 483 448
- DE-U1- 8 906 203
- DE-U1- 29 816 439
- JP-A- 2001 192 116

## Beschreibung

### Stand der Technik

Die Erfindung geht aus von einer Vorrichtung zum Führen von Leergut in verschiedene Transportrichtungen nach dem Oberbegriff des Anspruchs 1.

Derartige Vorrichtungen dienen dazu, Leergut nach der Rücknahme zu sortieren und verschiedenen Sammelbehältern oder verschiedenen Transportwegen zuzuführen. Zu dem Leergut zählen insbesondere Flaschen und Dosen. Es kann sich jedoch auch um Getränkekisten handeln. Die Rücknahme kann dabei automatisch durch einen Leergut-Rücknahmeautomaten oder manuell erfolgen. Bei der Rücknahme werden charakteristische Merkmale des Leerguts erfasst. Hierzu zählen beispielsweise das Material, die äußere Form, die Farbe, ein Strichcode oder die Wiederverwertbarkeit des Leerguts. Die Zuordnung des Leerguts zu verschiedenen Sammelbehältern oder verschiedenen Transportwegen erfolgt in Abhängigkeit dieser charakteristischen Merkmale. Dabei wird das Leergut auf einem Bandförderer in einer vorgegebenen Transportrichtung geführt. Bei dem Bandförderer kann es sich um einen V-Förderer mit zwei V-förmig angeordneten Transportbändern oder um einen Bandförderer mit einem in Förderebene horizontal ausgerichteten Transportband handeln. Von diesem Bandförderer werden die einzelnen Behälter des Leergutes in Abhängigkeit von ihren charakteristischen Merkmalen abgezweigt, ohne dass hierzu der Transport unterbrochen wird. Zu diesem Zweck ist mindestens ein Weichenelement vorgesehen, das in den Transportweg eingeführt und aus diesem entfernt werden kann. Das in den Transportweg des Bandförderer eingeführte Weichenelement blockiert für ein Leergut die Transportrichtung des Bandförderers und sorgt für eine Richtungsänderung. Das Leergut wird in eine zweite Transportrichtung umgeleitet, die von der Transportrichtung des Bandförderers abweicht. In dieser zweiten Transportrichtung ist entweder ein mit einem Weichenelement ausgestattet, kann das Leergut zwei verschiedenen Sammelbehältern oder Transportwegen zugeordnet werden. Soll eine Sortierung nach mehreren Kriterien erfolgen, müssen entsprechend mehr Weichenelemente vorgesehen sein.

Es sind Vorrichtungen zum Sortieren von Leergut mit Weichenelementen in Form von drehbaren Scheiben bekannt. Diese Scheiben drehen sich um ihre zentrale Achse. Außerdem sind sie an einem schwenkbaren Arm angeordnet, um sie in den Transportweg eines Bandförderers einzuführen und aus diesem zu entfernen. Als nachteilig erweist sich bei derartigen Scheiben, dass zwei Antriebe notwendig sind. Ein erster Antrieb sorgt für die Rotation um die zentrale Achse, ein zweiter Antrieb sorgt für das Einführen in den Transportweg des Bandförderers und für das Entfernen aus dem Transportweg. Die Vorrichtung ist daher aufwendig in der Herstellung. Ferner beansprucht die an dem Arm schwenkbar angeordnete Scheibe viel Platz. Die Vorrichtung weist daher ein großes Baumaß auf. Schließlich kann das Leergut beim Berühren der rotierenden Scheibe zusätzlich zu der eigentlichen Transportbewegung in eine schwingende oder schaukelnde Bewegung versetzt werden. Dies kann dazu führen, dass das Leergut aus dem eigentlich vorgesehenen Transportweg ausbricht.

WO 2008/079010 beschreibt eine Förderanlage mit einem kreisförmigen Bandförderer bei der ein Produkt von einem Förderband auf ein anderes übertragen wird. Aufgrund der Kreisform des Bandförderers ist die hier beschriebene Förderanlage bereits nicht für den Transport von Leergut geeignet, da dieses im Allgemeinen eine zylindrische Form aufweist, und somit im Betrieb vom Transportband rollen würde. Die DE 8906203 U1 beschreibt eine Vorrichtung zur Umlenkung von Fördergut im Produktions- und Lagerbereich. Hierbei wird das Fördergut, z.B in Transportbehältern mit einer rechteckigen Grundfläche, auf Rollenbahnen transportiert, was ebenfalls eine Eignung der Vorrichtung für den Transport von Leergut ausschließt.

Der Erfindung liegt die Aufgabe zugrunde, eine Vorrichtung zum Führen von Leergut in verschiedene Transportrichtungen zur Verfügung zu stellen, die einfach und kostengünstig herzustellen ist, ein kleines Baumaß aufweist und das Leergut in gleichförmiger Bewegung von einem Bandförderer abzweigt.

### Die Erfindung und ihre Vorteile

Die Aufgabe wird durch eine Vorrichtung mit den Merkmalen des Anspruchs 1 gelöst. Die Vorrichtung zeichnet sich dadurch aus, dass sie mit einem Bandförderer, der als ein V-Förderer mit zwei V-förmig angeordneten Transportbändern ausgestaltet ist, und einem um eine Achse drehbar oder schwenkbar gelagerten Weichenelement ausgestattet ist, das einen gekrümmten Abschnitt aufweist.

Der gekrümmte Abschnitt gibt den Weg oder die Bahn vor, der ein Leergut folgt, das von dem Bandförderer in eine zweite Transportrichtung abgezweigt wird. Befindet sich das Weichenelement in seiner zweiten Position, in der es den Transportweg des Bandförderers versperrt, so stößt ein auf dem Bandförderer transportiertes Leergut mit seinem in Transportrichtung vorderen Ende an das Weichenelement. Die Krümmung des Abschnitts sorgt dafür, dass das Leergut eine Kraft erfährt, die eine Komponente senkrecht zur Transportrichtung des Bandförderers aufweist. Da der Bandförderer kontinuierlich fördert, gleitet das Leergut mit seinem vorderen Ende an dem gekrümmten Abschnitt des Weichenelements entlang und folgt seinem Verlauf. Ist das Weichenelement in seiner zweiten Position angeordnet, in der es den Transportweg des Bandförderer versperrt, so verläuft die Tangente des gekrümmten Abschnitts an seinem einen Ende parallel zum Bandförderer. Die Tangente an dem entgegen gesetzten Ende verläuft parallel zu der zweiten Transportrichtung, in die das Leergut abgezweigt wird. Zwischen seinen beiden Enden ist der gekrümmte Abschnitt bevorzugt kantenfrei ausgebildet. Ferner ist die der Transportrichtung des Bandförderers entgegen gerichtete Oberfläche des Weichenelements glatt ausgebildet, so dass die Reibung zwischen dem Leergut und dem Weichenelement gering ist.

Das Weichenelement wirkt damit wie eine Leitplanke, ein Leitblech oder eine Kulissenführung. Befindet sich das Weichenelement im Transportweg des Bandförderers, zwingt es ein Leergut, seinem Verlauf zu folgen und sorgt damit für eine Richtungsänderung der Bewegung des Leergutes.

Das Weichenelement ist lediglich mit einem Antrieb ausgestattet, der das Weichenelement zwischen einer den Transportweg des Bandförderers frei gebenden ersten Position und einer den Transportweg des Bandförderers sperrenden zweiten Position hin- und herbewegt. Darüber hinaus findet keine Bewegung des Weichenelements statt. Die erfindungsgemäße Vorrichtung ist damit einfacher und kostengünstiger herzustellen als bekannte Vorrichtungen.

Zum Entfernen des Weichenelements aus dem Transportweg des Bandförderers wird das Weichenelement durch den Antrieb so weit zur Seite oder nach oben bewegt, dass es mit dem auf dem Bandförderer transportierten Leergut nicht mehr in Berührung kommt. Hierzu kann das Weichenelement geschoben, gezogen oder gedreht werden. Wie und in welche Richtung die Bewegung erfolgt, hängt vom Antrieb und von dem zur Verfügung stehenden Platz ab. In jedem Fall beansprucht das Weichenelement weniger Platz als die an einem schwenkbaren Arm angeordnete Scheibe der aus dem Stand der Technik bekannten Vorrichtung.

Die Ausdehnung des gekrümmten Abschnitts des Weichenelements ist in vertikaler Richtung bevorzugt mindestens so groß, wie die größtmögliche Ausdehnung eines von der Vorrichtung transportierten Leergutes in vertikaler Richtung. Diese größtmögliche Ausdehnung eines Leergutes ist vorgegeben. Leergut mit größeren Ausmaßen wird nicht akzeptiert. Wird das Leergut auf dem Bandförderer liegend transportiert, so entspricht die Ausdehnung des Leerguts in vertikaler Richtung dem Durchmesser der zumeist runden Flaschen und Dosen. Wird das Leergut dagegen stehend transportiert, so entspricht die Ausdehnung des Leerguts in vertikaler Richtung der Höhe der Flaschen und Dosen.

Für die Richtungsänderung des Leergutes ist die Krümmung des Abschnitts wesentlich, die durch die Transportrichtung des Bandförderers, durch die zweite Transportrichtung und die Verbindung zwischen diesen beiden Richtungen vorgegeben wird. Die Krümmung sorgt für einen weichen und gleichmäßigen Übergang zwischen diesen beiden Richtungen. In einer senkrechten Richtung zu der durch die Transportrichtung des Bandförderers und durch die zweite Transportrichtung aufgespannten Ebene kann das Weichenelement entweder ebenfalls gekrümmt oder eben ausgebildet sein.

Das Niveau des Bandförderers und das Niveau der sich in zweiter Transportrichtung anschließenden Sammelbehälter oder Transporteinrichtungen können identisch oder verschieden sein. Sie können in horizontaler Ausrichtung oder unter einer Neigung gegen die Horizontale anordnet sein.

Die dem Leergut zugewandte Oberfläche des Weichenelements ist derart beschaffen, dass die Reibung zwischen dem Leergut und dem Weichenelement möglichst gering ist. Auf diese Weise kann das Leergut entlang der Oberfläche nahezu ungehindert gleiten.

Das Weichenelement ist um eine Achse drehbar oder schwenkbar gelagert. In diesem Fall wird das Weichenelement zum Bewegen von einer ersten in seine zweite Position gedreht oder geschwenkt. Vorteilhafter Weise verläuft die Achse der Dreh- oder Schwenkbewegung vertikal.

Nach einer weiteren vorteilhaften Ausgestaltung der Erfindung ist an dem Bandförderer ein zweiter Bandförderer angeordnet, dessen Transportrichtung mit der zweiten Transportrichtung übereinstimmt. Das Leergut wird durch das Weichenelement mit entsprechender Positionierung auf den zweiten Bandförderer umgeleitet und durch diesen seiner weiteren Ver- oder Bearbeitung zugeführt.

Nach einer weiteren vorteilhaften Ausgestaltung der Erfindung beträgt der Winkel zwischen der Transportrichtung des Bandförderers und der zweiten Transportrichtung 90 Grad. Der Winkel zwischen diesen beiden Richtungen wird auch als Weichenwinkel bezeichnet.

Nach einer weiteren vorteilhaften Ausgestaltung der Erfindung weist das Weichenelement einen zweiten ebenen Abschnitt auf, der starr und kantenfrei mit dem gekrümmten Abschnitt verbunden ist. Dieser zweite Anschnitt dient beispielsweise der Aufnahme der Achse, an welchem das Achsenelement drehbar gelagert ist. Ferner kann der zweite ebene Abschnitt zusätzlich zur Führung des Leerguts in Transportrichtung des Bandförderers oder in zweiter Transportrichtung dienen. Darüber hinaus besteht die Möglichkeit einen dritten, ebenfalls ebenen Abschnitt an dem Weichenelement vorzusehen. In diesem Fall kann der zweite ebene Abschnitt beispielsweise in Transportrichtung des Bandförderers und der dritte ebene Abschnitt in zweiter Transportrichtung weisen. Dieser Verlauf bezieht sich jeweils auf die zweite Position des Weichenelements, in welcher dieses den Transportweg des Bandförderers versperrt.

Nach einer weiteren vorteilhaften Ausgestaltung der Erfindung ist die Vorrichtung mit mehreren Weichenelementen ausgestattet. Dabei können jeweils zwei Weichenelemente an derselben Position des Bandförderers rechts und links des Bandförderers angeordnet sein. Dies ermöglicht das Abzweigen von Leergut vom Bandförderer nach rechts oder links. Darüber hinaus können mehrere Weichenelemente hintereinander am Bandförderer angeordnet sein. Dies ermöglicht die Kaskadierung des Leerguts auf kleinem Raum. Das Leergut kann nach beliebig vielen Kriterien sortiert werden.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung sind Ausführungsbeispiele einer erfindungsgemäßen Vorrichtung dargestellt. Es zeigen:
- Figur 1: eine Vorrichtung mit zwei verschiebbaren Weichenelementen in einer Ansicht von oben, Abzweigung des Leerguts nach links,
- Figur 2: Vorrichtung gemäß Figur 1, Abzweigung des Leerguts nach rechts,
- Figur 3: Ausführungsbeispiel einer Vorrichtung mit drehbar angeordneten Weichenelementen in einer Ansicht von oben, Abzweigung des Leergut am ersten Weichenelement,
- Figur 4: Vorrichtung gemäß Figur 3, Abzweigung des Leerguts am zweiten Weichenelement.

### Beschreibung der Ausführungsbeispiele

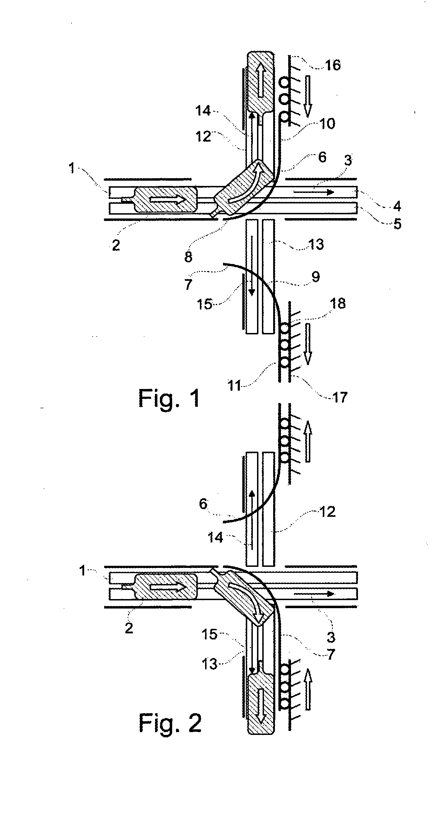

Die Figuren 1 und 2 zeigen eine Vorrichtung zum Führen von Leergut in verschiedene Transportrichtungen in einer Ansicht von oben. Die Vorrichtung ist mit einem Bandförderer 1 ausgestattet, der Leergut in Form von Flaschen 2 in Transportrichtung liegend transportiert. Die Transportrichtung ist in Figur 1 durch einen Pfeil 3 gekennzeichnet. Der Bandförderer 1 weist zwei V-förmig angeordnete Transportbänder 4 und 5 auf. Oberhalb des Bandförderers 1 sind zwei Weichenelemente 6 und 7 verschiebbar angeordnet. Jedes der beiden Weichenelemente 6 und 7 weist einen gekrümmten Abschnitt 8 und 9 sowie einen ebenen Abschnitt 10 und 11 auf. Bildet man an die gekrümmten Abschnitte 8 und 9 an den entgegen der Transportrichtung ausgerichteten Enden die Tangente, so verläuft diese parallel zur Transportrichtung 3 des Bandförderers. Die Tangente an das andere Ende der gekrümmten Abschnitte 8 und 9 der Weichenelemente 6 und 7 verläuft dagegen parallel zu den ebenen Abschnitten 10 und 11. Diese sind wiederum parallel zu einem zweiten und dritten Bandförderer 12 und 13 sowie zu deren Transportrichtungen 14 und 15. Die Transportrichtung des zweiten Bandförderers 12 wird als zweite Transportrichtung bezeichnet und ist in Figur 1 mit einem Pfeil 14 gekennzeichnet. Die Transportrichtung des dritten Bandförderers 13 wird als dritte Transportrichtung bezeichnet und ist in Figur 1 mit einem Pfeil 15 gekennzeichnet. Der zweite und dritte Bandförderer 12 und 13 sind wie der Bandförderer 1 ebenfalls V-Förderer.

Die beiden Weichenelemente 6 und 7 sind mit ihren ebenen Abschnitten 10 und 11 in Weichenführungen 16 und 17 über Rollen 18 geführt. Die Weichenelemente 6 und 7 werden durch einen Antrieb entlang der Weichenführungen verschoben. Diese Antriebe sind in der Zeichnung nicht dargestellt.

In der Einstellung gemäß Figur 1 befindet sich das Weichenelement 6 in einer den Transportweg des Bandförderers 1 sperrenden Position. Das Weichenelement 7 ist dagegen in Transportrichtung 15 verschoben und gibt den Transportweg des Bandförderers 1 frei. In dieser Einstellung der beiden Weichenelemente 6 und 7 werden die Flaschen 2 von der Transportrichtung 3 des Bandförderers in die zweite Transportrichtung 14 des zweiten Bandförderers umgeleitet. Figur 1 zeigt hierzu, wie eine Flasche 2 mit ihrem in Transportrichtung 3 nach vorne weisenden Flaschenboden an dem gekrümmten Abschnitt 8 des Weichenelements 6 entlang gleitet. Die Bewegungsrichtung der Flaschen 2 ist durch Pfeile auf den Flaschen gekennzeichnet.

Die Bandförderer 1, 12 und 13 werden kontinuierlich angetrieben, so dass die Bewegung der Flaschen 2 auch während der Richtungsänderung nicht unterbrochen wird.

In der Einstellung gemäß Figur 2 befindet sich das Weichenelement 7 in einer den Transportweg des Bandförderers 1 sperrenden Position. Das Weichenelement 6 ist dagegen in Transportrichtung 14 verschoben und gibt den Transportweg des Bandförderers 1 frei. In dieser Einstellung der beiden Weichenelemente 6 und 7 werden die Flaschen 2 von der Transportrichtung 3 des Bandförderers in die dritte Transportrichtung 15 des zweiten Bandförderers umgeleitet.

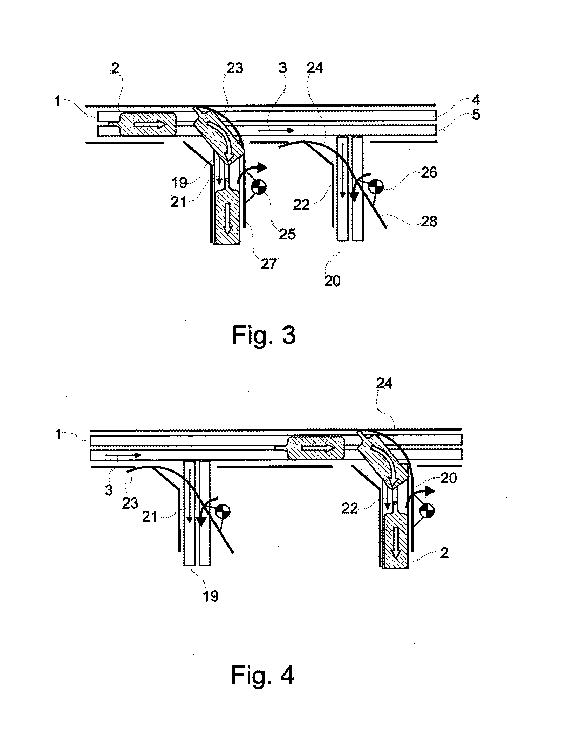

In den Figuren 3 und 4 ist ein Ausführungsbeispiel einer Vorrichtung zum Führen von Leergut in verschiedene Transportrichtungen in einer Ansicht von oben dargestellt. Gleiche Teile werden mit identischen Bezugsziffern bezeichnet. Dies gilt für den Bandförderer 1, die Flaschen 2, die Transportrichtung 3 des Bandförderers und die beiden Transportbänder 4 und 5 des Bandförderers 1. An dem Bandförderer 1 sind seitlich nacheinander zwei weitere Bandförderer angeordnet und zwar ein zweiter Bandförderer 19 und ein dritter Bandförderer 20. Im Unterschied zu dem ersten Ausführungsbeispiel sind die Transportrichtungen 21 und 22 des zweiten und dritten Bandförderers nicht nur parallel sondern weisen auch in dieselbe Richtung. Ein weiterer Unterschied zu den Figuren 1 und 2 besteht hinsichtlich der beiden Weichenelemente 23 und 24. Diese sind nicht verschiebbar sondern drehbar um zwei Achsen 25 und 26 gelagert. Hinsichtlich ihrer Form stimmen sie mit den beiden Weichenelementen 6 und 7 überein. Beide Weichenelemente 23 und 24 sind mit ihren ebenen Abschnitten 27 und 28 mit den beiden Achsen 25 und 26 verbunden. Die Antriebe, die die beiden Weichenelemente 23 und 24 um die beiden Achsen 25 und 26 drehen, sind in der Zeichnung nicht dargestellt.

In der Einstellung gemäß Figur 3 befindet sich das Weichenelement 23 in einer den Transportweg des Bandförderers 1 sperrenden Position. Das Weichenelement 24 ist dagegen gedreht und gibt den Transportweg des Bandförderers 1 frei. In dieser Einstellung der beiden Weichenelemente 23 und 24 werden die Flaschen 2 von der Transportrichtung 3 des Bandförderers in die zweite Transportrichtung 21 des zweiten Bandförderers 19 umgeleitet.

In der Einstellung gemäß Figur 4 befindet sich das Weichenelement 24 in einer den Transportweg des Bandförderers 1 sperrenden Position. Das Weichenelement 23 ist dagegen gedreht und gibt den Transportweg des Bandförderers 1 frei. In dieser Einstellung der beiden Weichenelemente 23 und 24 werden die Flaschen 2 von der Transportrichtung 3 des Bandförderers in die dritte Transportrichtung 22 des dritten Bandförderers 20 umgeleitet.

Sämtliche Merkmale können sowohl einzeln als auch in beliebiger Kombination miteinander erfindungswesentlich sein.

### Bezugszeichen

- 1: Bandförderer
- 2: Flasche
- 3: Transportrichtung des Bandförderers
- 4: Transportband des Bandförderers
- 5: Transportband des Bandförderers
- 6: Weichenelement
- 7: Weichenelement
- 8: gekrümmter Abschnitt des Weichenelements 6
- 9: gekrümmter Abschnitt des Weichenelements 7
- 10: ebener Abschnitt des Weichenelements 6
- 11: ebener Abschnitt des Weichenelements 7
- 12: zweiter Bandförderer
- 13: dritter Bandförderer
- 14: zweite Transportrichtung
- 15: dritte Transportrichtung
- 16: Weichenführung
- 17: Weichenführung
- 18: Rolle
- 19: zweiter Bandförderer
- 20: dritter Bandförderer
- 21: Transportrichtung des zweiten Bandförderers
- 22: Transportrichtung des dritten Bandförderers
- 23: Weichenelement
- 24: Weichenelement
- 25: Achse
- 26: Achse
- 27: ebener Abschnitt
- 28: ebener Abschnitt

## Patentansprüche

1. Vorrichtung zum Führen von Leergut in verschiedene Transportrichtungen mit mindestens einem Bandförderer (1),
mit mindestens einem oberhalb der Förderebene(n) des Bandförderers (1) relativ zum Bandförderer (1) beweglich angeordneten Weichenelement (6, 7, 23, 24),
mit einem Antrieb für das Weichenelement (6, 7, 23, 24), um das Weichenelement (6, 7, 23, 24) zwischen einer ersten, den Bandförderer (1) in Transportrichtung (3) für ein Leergut frei gebenden Position und einer zweiten, den Bandförderer (1) in Transportrichtung für ein Leergut versperrenden und das Leergut in eine zweite Transportrichtung (14, 15, 21, 22) umlenkenden Position hin- und herzubewegen,
wobei das Weichenelement (6, 7, 23, 24) einen gekrümmten Abschnitt (8, 9) aufweist,
wobei der Bandförderer ein V-Förderer mit zwei V-förmig angeordneten Transportbändern ist,
die Tangente an dem einen Ende des gekrümmten Abschnitts (8, 9) in der zweiten Position des Weichenelements (6, 7, 23, 24) parallel zur Transportrichtung (3) des Bandförderers ist (1),
die Tangente an dem entgegen gesetzten Ende des gekrümmten Abschnitts (8, 9) in der zweiten Position des Weichenelements (6, 7, 23, 24) parallel zur zweiten Transportrichtung (14, 15, 21, 22) ist, und
das Weichenelement (23, 24) um eine Achse (25, 26) drehbar oder schwenkbar gelagert ist.

2. Vorrichtung nach Anspruch 1, **dadurch gekennzeichnet, dass** die Achse (25, 26) vertikal ausgerichtet ist.

3. Vorrichtung nach einem der vorhergehenden Ansprüche, **dadurch gekennzeichnet, dass** der gekrümmte Abschnitt (8, 9) des Weichenelements (6, 7, 23, 24) zwischen seinen Enden kantenfrei ausgebildet ist.

4. Vorrichtung nach einem der vorhergehenden Ansprüche, **dadurch gekennzeichnet, dass** an dem Bandförderer (1) ein zweiter Bandförderer (12, 13, 19, 20) angeordnet ist, dessen Transportrichtung (14, 15, 21, 22) mit der zweiten Transportrichtung übereinstimmt.

5. Vorrichtung nach einem der vorhergehenden Ansprüche, **dadurch gekennzeichnet, dass** der Winkel zwischen der Transportrichtung (3) des Bandförderers (1) und der zweiten Transportrichtung (14, 15, 21, 22) 90° beträgt.

6. Vorrichtung nach einem der vorhergehenden Ansprüche, **dadurch gekennzeichnet, dass** das Weichenelement (6, 7, 23, 24) einen zweiten, ebenen Abschnitt (10, 11, 27, 28) aufweist, der starr und kantenfrei mit dem gekrümmten Abschnitt (8, 9) verbunden ist.

7. Vorrichtung nach einem der vorhergehenden Ansprüche, **dadurch gekennzeichnet, dass** sie mit mehreren Weichenelementen (6, 7, 23, 24) ausgestattet ist.

## Claims

1. Apparatus for guiding empty containers in different transporting directions,
having at least one belt conveyor (1),
having at least one diverter element (6, 7, 23, 24), which is arranged above the conveying plane(s) of the belt conveyor (1) such that it can be moved relative to the belt conveyor (1),
and having a drive for the diverter element (6, 7, 23, 24), in order to move the diverter element (6, 7, 23, 24) back and forth between a first position, in which it frees the belt conveyor (1) in the transporting direction (3) for an empty container, and a second position, in which it blocks the belt conveyor (1) in the transporting direction for an empty container and deflects the empty container in a second transporting direction (14, 15, 21, 22),
wherein the diverter element (6, 7, 23, 24) has a curved portion (8, 9),
wherein the belt conveyor is a V conveyor with two transporting belts arranged in the form of a V,
the tangent at the one end of the curved portion (8, 9) in the second position of the diverter element (6, 7, 23, 24) is parallel to the transporting direction (3) of the belt conveyor (1),
the tangent at the opposite end of the curved portion (8, 9) in the second position of the diverter element (6, 7, 23, 24) is parallel to the second transporting direction (14, 15, 21, 22), and
the diverter element (23, 24) is mounted such that it can be rotated or pivoted about a spindle (25, 26).

2. Apparatus according to Claim 1, **characterized in that** the spindle (25, 26) is oriented vertically.

3. Apparatus according to either of the preceding claims, **characterized in that** the curved portion (8, 9) of the diverter element (6, 7, 23, 24) is of edge-free design between its ends.

4. Apparatus according to one of the preceding claims, **characterized in that** the belt conveyor (1) has arranged on it a second belt conveyor (12, 13, 19, 20), of which the transporting direction (14, 15, 21, 22) coincides with the second transporting direction.

5. Apparatus according to one of the preceding claims, **characterized in that** the angle between the transporting direction (3) of the belt conveyor (1) and the second transporting direction (14, 15, 21, 22) is 90°.

6. Apparatus according to one of the preceding claims, **characterized in that** the diverter element (6, 7, 23, 24) has a second, planar portion (10, 11, 27, 28), which is connected in a rigid and edge-free manner to the curved portion (8, 9).

7. Apparatus according to one of the preceding claims, **characterized in that** it is equipped with a plurality of diverter elements (6, 7, 23, 24).

## Revendications

1. Dispositif pour le guidage de produits vides dans différentes directions de transport,
comprenant au moins un convoyeur à bande (1), comprenant au moins un élément d'aiguillage (6, 7, 23, 24) disposé de manière déplaçable par rapport au convoyeur à bande (1) au-dessus du plan de transport du convoyeur à bande (1),
comprenant un entraînement pour l'élément d'aiguillage (6, 7, 23, 24), afin de déplacer d'avant en arrière l'élément d'aiguillage (6, 7, 23, 24) entre une première position libérant le convoyeur à bande (1) dans la direction de transport (3) pour un produit vide, et une deuxième position bloquant le convoyeur à bande (1) dans la direction de transport pour un produit vide et déviant le produit vide dans une deuxième direction de transport (14, 15, 21, 22),
l'élément d'aiguillage (6, 7, 23, 24) présentant une portion courbe (8, 9),
le convoyeur à bande étant un convoyeur en V avec deux bandes transporteuses disposées en forme de V,
la tangente à l'une des extrémités de la portion courbe (8, 9) dans la deuxième position de l'élément d'aiguillage (6, 7, 23, 24) étant parallèle à la direction de transport (3) du convoyeur à bande (1),
la tangente à l'extrémité opposée de la portion courbe (8, 9) dans la deuxième position de l'élément d'aiguillage (6, 7, 23, 24) étant parallèle à la deuxième direction de transport (14, 15, 21, 22), et
l'élément d'aiguillage (23, 24) étant supporté à rotation ou de manière pivotante autour d'un axe (25, 26).

2. Dispositif selon la revendication 1, **caractérisé en ce que** l'axe (25, 26) est orienté verticalement.

3. Dispositif selon l'une quelconque des revendications précédentes, **caractérisé en ce que** la portion courbe (8, 9) de l'élément d'aiguillage (6, 7, 23, 24) est réalisée sans arête entre ses extrémités.

4. Dispositif selon l'une quelconque des revendications précédentes, **caractérisé en ce qu'**un deuxième convoyeur à bande (12, 13, 19, 20) est disposé au niveau du convoyeur à bande (1), dont la direction de transport (14, 15, 21, 22) coïncide avec la deuxième direction de transport.

5. Dispositif selon l'une quelconque des revendications précédentes, **caractérisé en ce que** l'angle entre la direction de transport (3) du convoyeur à bande (1) et la deuxième direction de transport (14, 15, 21, 22) est de 90°.

6. Dispositif selon l'une quelconque des revendications précédentes, **caractérisé en ce que** l'élément d'aiguillage (6, 7, 23, 24) présente une deuxième portion plane (10, 11, 27, 28) qui est connectée de manière rigide et sans arête à la portion courbe (8, 9).

7. Dispositif selon l'une quelconque des revendications précédentes, **caractérisé en ce qu'**il est muni de plusieurs éléments d'aiguillage (6, 7, 23, 24).
